# EUROPEAN PATENT APPLICATION

(11) **EP 1 765 009 A2**
(43) Date of publication of application: **21.03.2007**
(21) Application number: 06017918.1
(22) Date of filing: 28.08.2006
(51) Int. Cl.: H04N 5/44, H04N 5/76

(54) **Television receiver**

(30) Priority: 20.09.2005 JP 2005271501
(71) Applicant: Orion Electric Company, LTD., Echizen-shi, Fukui-ken (JP)
(72) Inventor: Matsuda, Takashi, Echizen-shi Fukui-ken (JP)
(74) Representative: Kirschner, Klaus Dieter

(57) **Abstract**

At a reserved recording time, if a television receiver is turned off, then the television receiver is turned on, and a video of a reservation setting target channel is forcibly displayed. A content of a reserved program can be thereby checked. At this time, a mute control signal is output to a voice processing circuit to mute a voice. If a user does not transmit a volume change instruction for a predetermined time, then a TV circuit is turned off, and a reservation recording is continued. This can suppress unnecessary power consumption during user's absence.

## Description

The present invention relates to a television receiver that includes a recording reservation function.

Conventionally, a recording and reproducing apparatus such as a digital versatile disc (DVD) is connected to a television receiver. Recently, a multifunction machine having a recording and reproducing apparatus built in a television receiver has been widely used. Such a recording and reproducing apparatus or a multifunction machine having the recording and reproducing apparatus built in the television receiver includes a recording reservation function. This function enables a user to reserve a desired program by reserving and setting a channel, a broadcast time zone, a date, and a day of the week.

As the television receiver that includes such a recording reservation function, Japanese Utility Model Registration No. 3007639 discloses, for example, a program reservation television receiver that forcibly displays an image of a reserved program at a reservation time by inputting a program reservation number in advance. Japanese Patent Application Laid-Open No. 10-134446, for example, discloses a recording apparatus that makes a display for selecting whether to record a reserved program if a user views the reserved program at start of a reservation time.

The television receiver disclosed in Japanese Utility Model Registration No. 3007639 enables the user to confirm whether recording is normally performed if the television receiver is turned on at the reservation time. The recording apparatus disclosed in Japanese Patent Application Laid-Open No. 10-134446 enables the user to select whether to record a program at the reservation time or a predetermined time before the reservation time. According to Japanese Utility Model Registration No. 3007639, however, it is disadvantageously difficult for the user to check the reserved program on a monitor if the television receiver is turned off. Even while the television receiver is turned on, an unnecessarily recorded program is displayed on the monitor during, for example, user's absence. This disadvantageously, unnecessarily consumes power and possibly causes noise at nighttime or the like.

It is an object of the present invention to provide a television receiver that can check a reserved program at a recording reservation time whether the television receiver is turned on or off, and that can realize power saving during user's absence or the like without unnecessary power consumption during user's absence.

According to a first aspect of the present invention, there is provided a television receiver in which a recording and reproducing apparatus that includes a recording reservation function is built, the television receiver comprising: recording control means for controlling the recording and reproducing apparatus to start a recording reservation; control means for displaying a recording reservation target program on a monitor or displaying a content of the recording reservation target program on the monitor if the television receiver is turned on at a start time of the recording reservation and a program which is being viewed differs from the recording reservation target program; power control means for switching from a power-OFF state of the television receiver to a power-ON state if the power of the television receiver is turned off; and voice processing means for muting a voice at the start time of the recording reservation after having changed over the power-OFF state of the television receiver to the power-ON state.

According to a second aspect of the present invention, there is provided the television receiver based on the first aspect, further comprising: timer means for counting a time since the television receiver is turned on when the power-OFF state is changed over to the power-ON state at the start time of the recording reservation, wherein it is determined whether a volume change operation is performed for a predetermined time based on counting of the timer means, and if the volume change operation is not performed for the predetermined time, the television receiver is turned off by the power control means.

According to the first aspect of the present invention, if a channel, a broadcast time zone, a date, a day of the week and the like of a program are set, the reservation information is stored. At a reservation recording time, a reservation recording is started. At this time, if a channel that is being viewed differs from a reservation target channel, the channel is changed over to the reservation target channel. If the television receiver is turned off, then the television receiver is turned on, a video is displayed while a voice of the reservation target channel is muted, and reservation recording is started. With this constitution, it is possible to check the reserved program whether the television receiver is turned on or off.

According to the second aspect of the present invention, when the television receiver is changed from a power-OFF state to a power-ON state at the start time of the recording reservation, the timer means counts a time since the television receiver is turned on. It is determined whether a user transmits a volume change instruction. If the user transmits the volume change instruction, then the timer means resets timer counting, and the user views a reservation recording target program with a desired volume. If the user does not transmit the volume change instruction after passage of the predetermined time, then it is determined that user is absent or sleeping, the television receiver is turned off, and the reservation recording is continued until a reservation end time. Power saving can be thereby realized.

The present invention relates, therefore, to a television receiver that can check a reserved program and that can save power consumption during user's absence or the like.

A most preferred embodiment of the present invention will be described hereinafter with reference to the drawings.
Fig. 1 is a block diagram of a television receiver according to an embodiment of the present invention;
Fig. 2 is a block diagram of a main microcomputer shown in Fig. 1; and
Fig. 3 is a flowchart of a reservation recording method according to the embodiment.

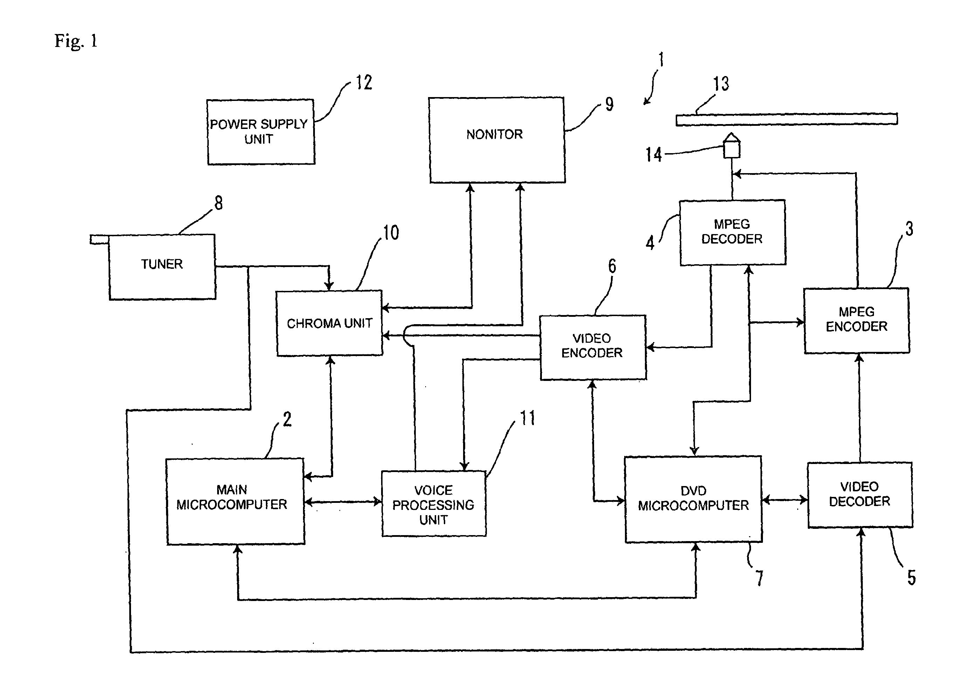

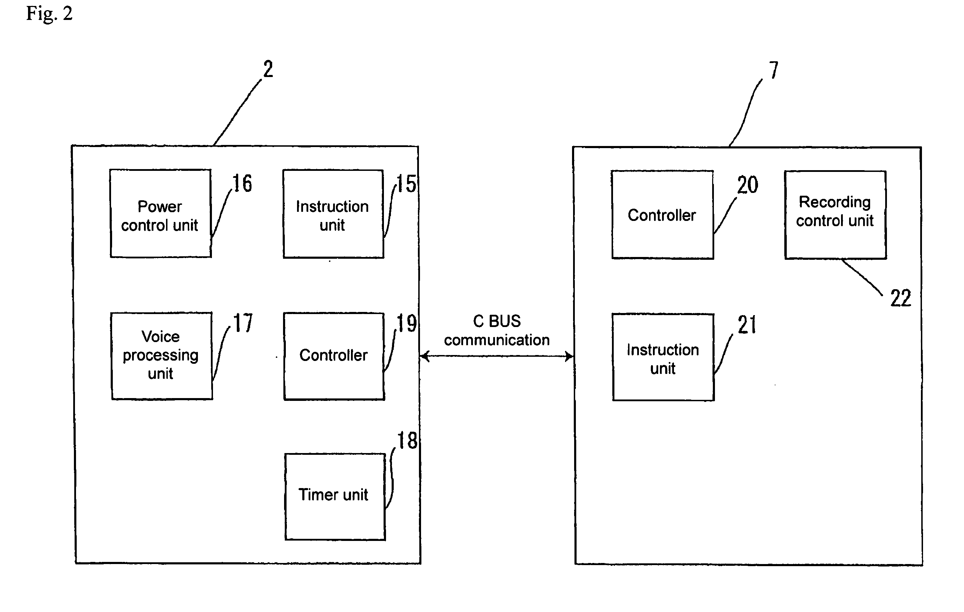

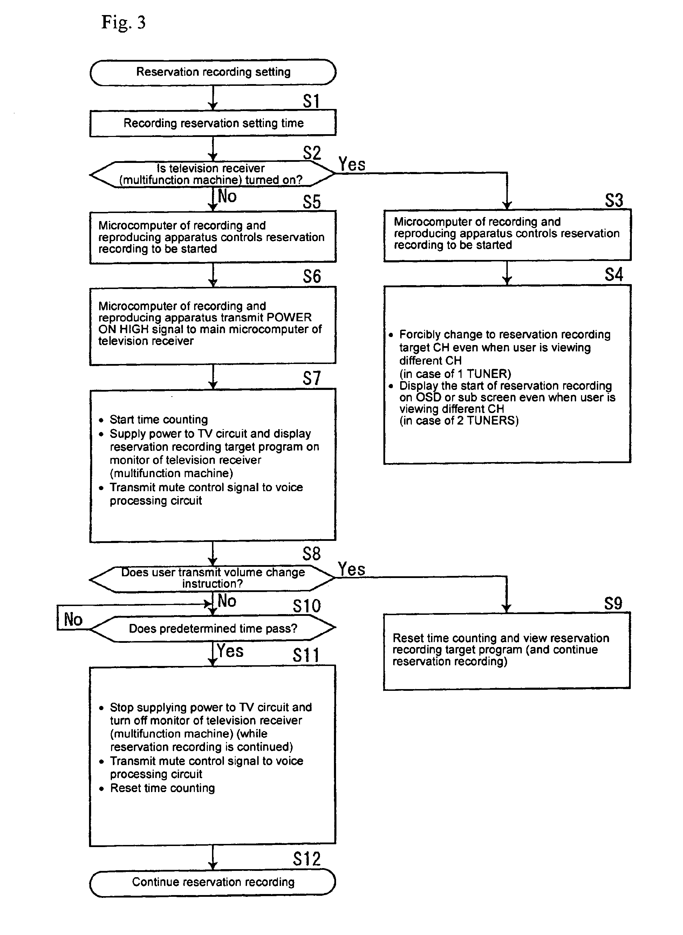

Figs. 1 to 3 depict one embodiment of the present invention. Fig. 1 is a block diagram of a television receiver according to the embodiment of the present invention. Fig. 2 is a block diagram of a main microcomputer shown in Fig. 1. Fig. 3 is a flowchart of a reservation recording method. A television receiver 1 according to this embodiment may be a multifunction machine having a recording and reproducing apparatus built in a television receiver. As shown in Fig. 1, the television receiver 1 (multifunction machine) includes a main microcomputer 2 and a DVD microcomputer 7. The main microcomputer 2 controls an overall operation of the television receiver 1. The DVD microcomputer 7 controls an MPEG encoder 3, an MPEG decoder 4, a video decoder 5, and a video encoder 6. The television receiver 1 also includes a tuner 8, a monitor 9, a chroma unit 10, a voice processing unit 11, a power supply unit 12, and a pickup unit 14. The tuner 8 selects a broadcast signal on a desired channel from among a plurality of broadcast signals received at a receiving antenna, and obtains a video signal corresponding to the selected broadcast signal. The monitor 9 is constituted by a cathode-ray tube (CRT) display or a flat panel display such as a liquid crystal display (LCD) that displays a video by the video signal output from the tuner 8 or that output from the video encoder 6. The chroma unit 10, the voice processing unit 11, and the power supply unit 12 perform a video processing for displaying the video on the monitor 9. The pickup unit 14 reads data stored in a disk 13 or stores data.

During recording, the video decoder 5 converts the video signal output from the tuner 8 into a digital signal, thereby obtaining digital recorded video data. With respect to this recorded video data, the MPEG encoder 3 compresses the digital signal to generate a MPEG stream for recording. The MPEG decoder 4 expands the MPEG stream stored in the disk to generate video data for reproducing, and outputs the video data for reproducing to the video encoder 6. The video encoder 6 converts the video data for reproducing into an analog video signal.

Controls exercised by the main microcomputer 2 and the DVD microcomputer 7 will next be described with reference to the block diagram of Fig. 2. The main microcomputer 2 is configured as follows. An input signal or the like from operation means (not shown) such as a remote controller is output to an instruction unit 15. The instruction unit 15 outputs the signal to a power controller 16, whereby a power is supplied to a TV circuit according to a user's requested operation. A voice processing unit 17 outputs a mute signal to a voice processing circuit unit (not shown) according to an instruction of the instruction unit 15. A timer unit 18 counts a time since the power is supplied to the TV circuit. A controller 19 controls the instruction unit 15, the voice processing unit 17, and the timer unit 18.

The DVD microcomputer 7 includes a controller 20, an instruction unit 21, and a recording control unit 22. The controller 20 controls respective constituent elements of the DVD microcomputer 7 according to an instruction of the instruction unit 21. The recording control unit 22 starts recording.

Referring next to the flowchart of Fig. 3, a reservation recording method according to this embodiment will be described. A user operates the remote controller of the television receiver 1 (multifunction machine), and sets a channel, a broadcast time zone, a date, a day of the week and the like of a program on a reservation recording setting screen. The channel, the broadcast time zone, the date, the day of the week and the like thus set by the remote controller are stored in a memory (not shown). At a reservation recording time (at a step S1), it is determined whether the television receiver 1 is turned on (at a step S2). If the television receiver 1 is turned on during user's viewing or the like, the recording control unit 22 of the DVD microcomputer 7 controls a reservation recording to be started (at a step S3). If a channel on which the user is viewing the program differs from a reservation recording target channel, then the controller 19 controls the tuner 8 to forcibly change the present channel to the reservation recording target channel. If the tuner 8 is so-called double tuners that include two tuners, then a channel on which the user is viewing the program is displayed on a main screen and a reservation recording target channel is displayed on a sub screen or on an on-screen display (OSD) so as to check a content of a reservation recording target program (at a step S4).

On the other hand, if the television receiver 1 is turned off, the recording control unit 22 of the DVD microcomputer 7 starts reservation recording (at a step S5). The power control unit 16 of the main microcomputer 2 supplies the power to the TV circuit (at a step S6). The timer unit 18 counts time since the power is supplied to the TV circuit, and a video of the reservation recording target channel is displayed on the monitor 9. At this time, the voice processing unit 17 outputs a mute control signal to the voice processing circuit to mute a voice of the television receiver 1 (at a step S7). It is then determined whether the user transmits a volume change instruction (at a step S8). If the user transmits the volume change instruction, then the timer unit 18 resets counting, and the reservation recording is continued while the user is viewing the reservation recording target program with a desired volume set by the user (at a step S9). On the other hand, if the user does not transmit the volume change instruction even after a predetermined time (at a step S10), it is determined that the user is absent or sleeping. The power control unit 16 turns off the television circuit to turn off the reservation recording screen displayed on the monitor 9. At this moment, the voice processing unit 17 outputs the mute control signal to the voice processing circuit to thereby return the volume to an ordinary volume. In addition, the timer unit 18 resets counting (at a step S11), and the reservation recording is continued (at a step S12).

As stated so far, according to the present invention, if the program which the user is viewing differs from the reservation recording target program at a reservation recording time, the channel is forcibly changed over to the reservation recording target channel. The user can thereby check the content of the reservation recording target program. Even if the television receiver 1 is turned off, the user is allowed to check the content of the reservation recording target program by forcibly turning on the television receiver 1. At this time, by muting the voice of the television receiver 1, it is possible to prevent a loud voice from being inadvertently output during user's absence, sleeping or the like. It is, therefore, possible to prevent the noise particularly at nighttime. Furthermore, if the volume change instruction is not transmitted for the predetermined time, then it is determined that the user is absent or sleeping, and the television receiver 1 is automatically turned off. It is possible to suppress unnecessary power consumption, and thereby realize power saving and rationalization.

One embodiment of the present invention has been described. However, the present invention is not limited to the embodiment and various changes and modifications can be made within the scope of the invention.

## Claims

1. A television receiver in which a recording and reproducing apparatus that includes a recording reservation function is built, the television receiver comprising:
recording control means for controlling the recording and reproducing apparatus to start a recording reservation;
control means for displaying a recording reservation target program on a monitor or displaying a content of the recording reservation target program on the monitor if the television receiver is turned on at a start time of the recording reservation and a program which is being viewed differs from the recording reservation target program;
power control means for switching from a power-OFF state of the television receiver to a power-ON state if the power of the television receiver is turned off; and
voice processing means for muting a voice at the start time of the recording reservation after having changed over the power-OFF state of the television receiver to the power-ON state.

2. The television receiver according to claim 1, further comprising:
timer means for counting a time since the television receiver is turned on when the power-OFF state is changed over to the power-ON state at the start time of the recording reservation, wherein
it is determined whether a volume change operation is performed for a predetermined time based on counting of the timer means, and if the volume change operation is not performed for the predetermined time, the television receiver is turned off by the power control means.
